# EUROPÄISCHE PATENTANMELDUNG

(11) **EP 4 481 228 A1**
(43) Veröffentlichungstag der Anmeldung: **25.12.2024**
(21) Anmeldenummer: 23180725.6
(22) Anmeldetag: 21.06.2023
(51) Int. Cl.: F16F 9/20, F16F 9/32, F16F 15/02, F16F 15/027, B62K 3/00, B62K 21/20

(54) **FEDER-DÄMPFER-ANORDNUNG**

(71) Anmelder: Driveman GmbH, 58339 Breckerfeld (DE)
(72) Erfinder: SCHNIPPERING, Axel, 58339 Breckerfeld (DE); WIEGAND, Andreas, 58579 Schalksmühle (DE)
(74) Vertreter: Patentanwälte Dörner & Kötter PartG mbB

(57) **Zusammenfassung**

Die Erfindung betrifft eine Feder-Dämpfer-Anordnung, insbesondere für Radfahrzeuge, umfassend ein Gehäuse (1), in dem eine Feder (2) sowie ein Stoßdämpfer (3) angeordnet sind, wobei der Stoßdämpfer (3) einen mit einem Fluid befüllten Zylinder (31) aufweist, in dem ein Kolben (33) verschiebbar angeordnet ist, der mit einer Kolbenstange (32) verbunden ist und wobei eine Einrichtung zur Einstellung der Federvorspannung vorhanden ist, wobei dass die Einrichtung mit einem Antrieb (4) verbunden ist, über den sie verstellbar ist, wobei der Antrieb (4) mit einer Steuer- und Regeleinrichtung (85) verbunden ist, über den er ansteuerbar ist und wobei ein Sensor (43) zur Ermittlung der im Ruhezustand vorliegenden Position des Kolbens (33) in dem Zylinder angeordnet ist, der mit der Steuer- und Regeleinrichtung (85) verbunden ist.

## Beschreibung

Die Erfindung betrifft eine Feder-Dämpfer-Anordnung, insbesondere für Radfahrzeuge, nach dem Oberbegriff des Patentanspruchs 1. Die Erfindung betrifft weiterhin ein Radfahrzeug nach dem Patentanspruch 13.

Feder-Dämpfer-Anordnungen kommen bei Fahrwerken von Radfahrzeugen zum Einsatz. Die Feder dient der Abfederung von Schwingungen der Masse; der Stoßdämpfer ist eingesetzt, die Schwingungen zu dämpfen und dadurch schnell abklingen zu lassen. Korrekter wäre die Bezeichnung "Schwingungsdämpfer", da nicht der Stoß selbst, sondern dessen Wirkung beeinflusst wird. Stoßdämpfer dienen nicht dem Abfangen von Fahrbahnunebenheiten ins Fahrzeug eingeleiteten Stößen; diese Aufgabe kommt der Federung zu. Stoßdämpfer haben die Aufgabe, Schwingungen des Fahrzeugaufbaus auf die Tragfederung sowie auch Schwingungen der Räder auf die Reifenfederung zu dämpfen. Die primäre Aufgabe einer Feder innerhalb der Federung liegt darin, der Masse des Fahrzeugaufbaus und des Fahrers entgegenzuwirken. Die Federhärte ist dabei so gewählt, dass genügend Negativfederweg zur Verfügung steht, ohne bei starker Belastung durchzuschlagen. Bei Zweiradfahrzeugen kommen regelmäßig Spiralfedern zum Einsatz. Die Federhärte einer Spiralfeder weist im Regelfall einen linearen Verlauf auf. Sie befindet sich zu Beginn einer Belastung in einem Ruhezustand. Während des Federweges erhöht sich die Federhärte. Über die Einstellung der Vorspannung der Spiralfeder wird der Negativfederweg eingestellt. Für die Erhöhung des Durchschlagwiderstandes ist die Vorspannung nicht geeignet - hierzu ist eine höhere Federhärte erforderlich.

Durch eine Auslegung eines Stoßdämpfers in Zugrichtung und in Druckrichtung kann die Fahrdynamik und damit der Fahrkomfort beeinflusst werden. Innerhalb der Zugstufe eines Stoßdämpfers wird die Fahrzeugfeder in dem Entspannungsvorgang innerhalb einer Schwingung gedämpft. In der Druckstufe erfolgt eine Dämpfung der Einfedergeschwindigkeit.

Der Fahrkomfort einer Feder-Dämpfer-Anordnung eines Radfahrzeugs ist durch Einstellung der Federvorspannung auf ein Durchschnittsgewicht eines Fahrers abgestimmt. Hierbei befindet sich der Kolben des Dämpfers in einer Mittelstellung; die Feder hat einen optimalen Restfederweg zum Abfangen von Fahrbahnunebenheiten. Weicht das Gewicht des Fahrers von dem zugrunde gelegten Durchschnittsgewicht ab, so kann es zu Komforteinbußen kommen. So kann es bei übermäßigem Überschreiten des zugrunde gelegten Durchschnittsgewichts zum Durchschlagen der Feder kommen, wodurch Fahrbahnunebenheiten ungefedert als Schläge an den Fahrer weitergeleitet werden. Ein übermäßiges Unterschreiten dieses Durchschnittsgewichtes hingegen führt zu einer ungünstigen außermittigen Position des Dämpferkolbens, wodurch dieser ein hartes Verhalten aufweist. Auch in diesem Fall besteht die Gefahr, dass Fahrbahnunebenheiten als Schläge an den Fahrer weitergeleitet werden.

Hier setzt die vorliegende Erfindung an. Der Erfindung liegt die Aufgabe zu Grunde, eine Feder-Dämpfer-Anordnung, insbesondere für ein Radfahrzeug bereitzustellen, bei dem auch bei unterschiedlichen Fahrergewichten ein hoher Fahrkomfort gewährleistet ist. Gemäß der Erfindung wird diese Aufgabe durch eine Feder-Dämpfer-Anordnung mit den Merkmalen des Patentanspruchs 1 gelöst.

Mit der Erfindung ist eine Feder-Dämpfer-Anordnung bereitgestellt, bei dem auch bei unterschiedlichen Fahrergewichten ein hoher Fahrkomfort gewährleistet ist. Dadurch, dass die Einrichtung zur Einstellung der Federvorspannung mit einem Antrieb verbunden ist, über den sie verstellbar ist, wobei der Antrieb mit einer Steuer- und Regeleinrichtung verbunden ist, über den er ansteuerbar ist und wobei ein Sensor zur Ermittlung der im Ruhezustand vorliegenden Position des Kolbens in dem Zylinder angeordnet ist, der mit der Steuer- und Regeleinrichtung verbunden ist, ist eine automatische Einstellung einer optimalen Federvorspannung in Bezug auf das anliegende Fahrergewicht ermöglicht. Bei dieser optimalen Federvorspannung befindet sich der Kolben in dem Zylinder in einer vorgegebenen mittleren Position.

In Weiterbildung der Erfindung umfasst das Gehäuse ein Standrohr, in dem die Feder zwischen einer ersten verschiebbaren Federaufnahme und einer zweiten ortsfesten Federaufnahme vorgespannt positioniert ist, wobei die Feder und der Stoßdämpfer in dem Standrohr vorzugsweise hintereinander angeordnet sind. Hierdurch ist eine platzsparende Anordnung der Feder-Dämpfer-Anordnung in einem Radfahrzeug ermöglicht.

In Weiterbildung der Erfindung ist das Gehäuse durch eine Lenkstange gebildet, die ein Standrohr umfasst, in dem die Feder zwischen einer ersten verschiebbaren Federaufnahme und einer zweiten ortsfesten Federaufnahme vorgespannt positioniert ist, wobei die Feder und der Stoßdämpfer in der Lenkstange vorzugsweise hintereinander angeordnet sind. Hierdurch ist eine platzsparende Anordnung der Feder-Dämpfer-Anordnung in einem Radfahrzeug ermöglicht.

In Ausgestaltung der Erfindung ist die Kolbenstange des Stoßdämpfers mit einem Verbindungsrohr oder einer Verbindungsstange verbunden, die durch die Feder geführt ist, die als Druckfeder ausgebildet ist. Hierdurch ist ein Anschluss einer Kolbenwelle zur Verbindung mit einer Radaufnahme ermöglicht.

In weiterer Ausgestaltung der Erfindung umfasst die Einrichtung zur Einstellung der Federvorspannung eine Gewindeaufnahme, die ein Gewinde, vorzugsweise ein Innengewinde aufweist, über das sie mit einem Gewinde, vorzugsweise einem Außengewinde eines Gewindeholms eines Federsitzes im Eingriff ist, der die erste Federaufnahme ausbildet und an dem die Feder anliegt. Hierdurch ist eine Verstellung der Federvorspannung durch eine Rotation der Gewindeaufnahme ermöglicht. Bevorzugt ist der Antrieb mit einer Antriebswelle verbunden, über die er mit der Einrichtung zur Einstellung der Federvorspannung, vorzugsweise mit dessen Gewindeaufnahme verbunden ist.

In Weiterbildung der Erfindung ist der Antrieb durch einen Elektromotor gebildet, dessen Antriebszapfen über ein Antriebszahnrad mit einer Innenverzahnung der Antriebswelle verbunden ist. Hierdurch ist eine Übersetzung zwischen Antrieb und Antriebswelle ermöglicht. Bevorzugt ist die Antriebswelle hohl ausgebildet und über ein Lager, vorzugsweise ein Nadellager in dem ersten Gehäuse drehbar gelagert.

In Ausgestaltung der Erfindung ist der Zylinder des Stoßdämpfers formschlüssig mit der Gewindeaufnahme verbunden, wobei der Zylinder vorzugsweise zumindest einen Teil der Antriebswelle ausbildet. Hierdurch dient der Stoßdämpferzylinder zugleich der Übertragung einer von dem Antrieb erzeugten Rotation auf die Gewindeaufnahme.

In weiterer Ausgestaltung der Erfindung ist die Kolbenstange des Stoßdämpfers oder ein mit dieser verbundenes Verbindungsteil mit wenigstens einem Magneten verbunden, wobei an dem Zylinder oder der Antriebswelle wenigstens ein Hall-Sensor angeordnet ist, der mit dem wenigstens einen Magneten zusammenwirkt. Hierdurch ist die Position des Kolbens in dem Zylinder des Stoßdämpfers detektierbar. Das Verbindungsteil ist vorzugsweise durch eine Verbindungsstange oder ein Verbindungsrohr gebildet.

In weiterer Ausgestaltung der Erfindung ist die Gewindeaufnahme und/oder der Federsitz mit wenigstens einem Magneten versehen, wobei an dem Gehäuse wenigstens ein Hall-Sensor angeordnet ist, der mit dem wenigstens einen Magneten zusammenwirkt. Hierdurch ist die Detektion einer Endlagenstellung ermöglicht. Bevorzugt ist ein Hallsensor zu Detektion der Endlagenstellung in Druckstufenrichtung und ein Hallsensor zur Detektion der Endlagenstellung in Zugstufenrichtung angeordnet. Über die Endlagensignale der Hallsensoren ist eine selbsttätige Blockierung des Antriebs ermöglicht. Hierzu werden die Endlagensignale an die Steuerung es Antriebs geleitet.

In Weiterbildung der Erfindung ist die Steuer- und Regeleinrichtung derart eingerichtet, dass in Abhängigkeit von der von dem wenigstens einen Hallsensor gemeldeten Position des Kolbens in dem Zylinder die Federvorspannung über den Antrieb derart verstellt wird, dass der Kolben in dem Zylinder eine voreingestellte Position einnimmt. Hierdurch ist eine optimale Kolbenstellung des Stoßdämpfers in Ruheposition der Feder-Dämpfer-Anordnung erzielt.

In Ausgestaltung der Erfindung ist ein Akkumulator angeordnet, der mit dem Antrieb elektrisch verbunden ist. Hierdurch ist eine autarke Stromversorgung des Antriebs gewährleistet. Der Akkumulator kann beispielsweise mit eine an einem Rad des Radfahrzeugs verbundenen Generator verbunden sein, wodurch eine kontinuierliche Aufladung des Akkumulators ermöglicht ist. Alternativ oder zusätzlich können zur Aufladung des Akkumulators an dem Radfahrzeug auch Solarkollektoren angeordnet sein.

Gegenstand der Erfindung ist weiterhin ein Radfahrzeug, insbesondere ein Zweiradfahrzeug, mit wenigstens einer Radaufhängung, die eine Feder-Dämpfer-Anordnung der vorstehend angeführten Art aufweist.

In Weiterbildung der Erfindung weist das Radfahrzeug eine Lenkstange auf, in der zur Abfederung von Stößen eine Feder-Dämpfer-Anordnung der vorstehend angeführten Art angeordnet ist, wobei das Gehäuse durch eine Lenkstange (81) gebildet ist, die das Standrohr umfasst.

Vorzugsweise ist die Verbindungsstange oder das Verbindungsrohr mit einer Keilwelle verbunden, die mit der Radaufhängung verbunden ist. Besonders bevorzugt ist das Zweiradfahrzeug ein Elektroroller.

Andere Weiterbildungen und Ausgestaltungen der Erfindung sind in den übrigen Unteransprüchen angegeben. Ausführungsbeispiele sind in den Zeichnungen dargestellt und werden nachfolgend im Einzelnen beschrieben. Es zeigen:
- Figur 1:: die Darstellung einer Feder-Dämpfer-Anordnung
a) in der Vorderansicht;
b) im Längsschnitt;
- Figur 2:: die Feder-Dämpfer-Anordnung aus 1
a) in transparenter Darstellung;
b) im Längsschnitt;

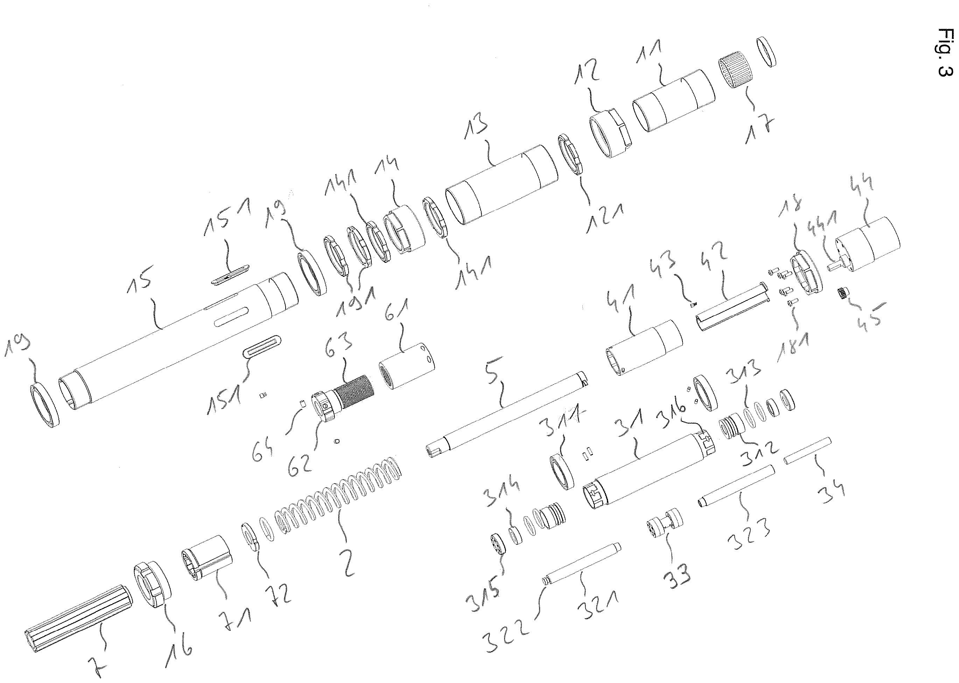

- Figur 3:: die Darstellung der Feder-Dämpfer-Anordnung aus Figur 1 in Explosionsdarstellung;
- Figur 4:: die Darstellung der Feder-Dämpfer-Anordnung aus Figur 1
a) in Neutralstellung (50 kg);
b) in Neutralstellung Stellung (vorgespannt 120 kg);
c) in ausgefederter Stellung (50 kg);
d) in ausgefederter Stellung (vorgespannt 120 kg);
e) in eingefederter Stellung (50 kg);
d) in eingefederter Stellung (vorgespannt 120 kg);
- Figur 5:: die schematische Darstellung eines Elektrorollers und

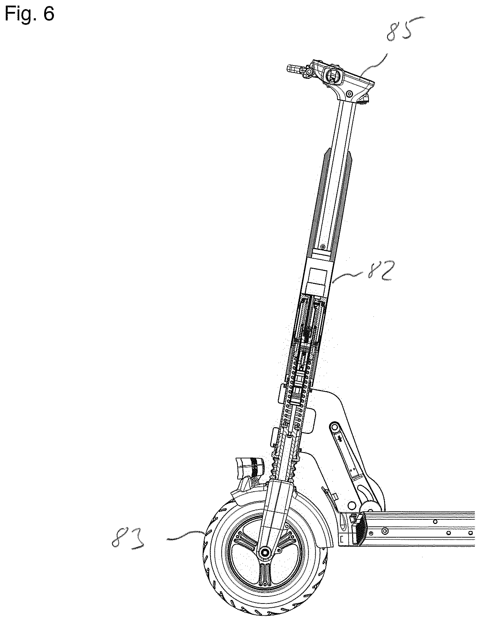

- Figur 6:: die Darstellung des Lenkers des Elektrorollers aus Figur 5 im Längsschnitt.

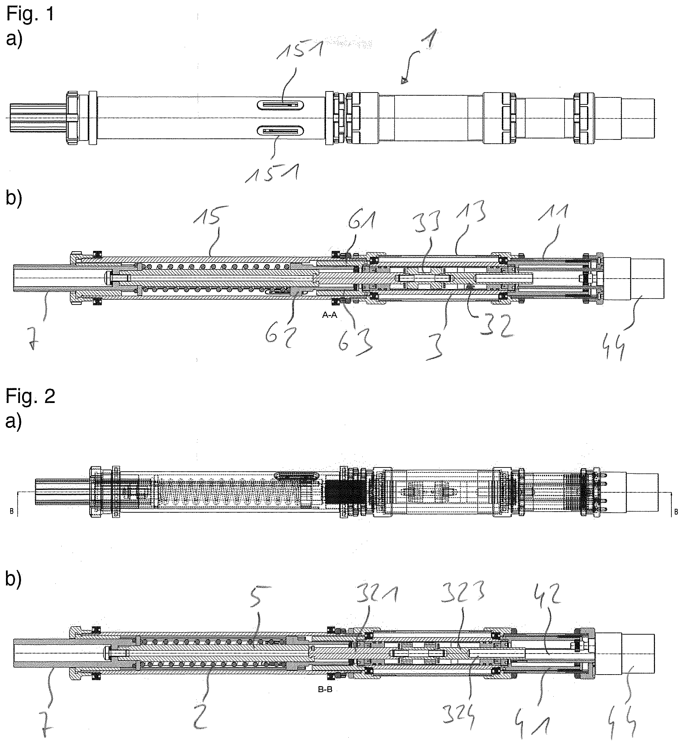

Die als Ausführungsbeispiel gemäß Figur 1 gewählte Feder-Dämpfer-Anordnung umfasst ein erstes Gehäuse 1, in dem hintereinander eine als Spiraldruckfeder ausgeführte Feder 2 und ein Stoßdämpfer 3 angeordnet sind.

Der Stoßdämpfer 3 umfasst einen mit Hydrauliköl gefüllten Zylinder 31, durch den eine Kolbenstange 32 verschiebbar geführt ist. Auf der Kolbenstange 32 ist ein Kolben 33 angeordnet, der in bekannter Art und Weise mit Ventilen versehen ist.

Der Zylinder 31 des Stoßdämpfers 3 ist an beiden Enden jeweils mit einem Durchführstopfen 312 verschlossen, der über zwei O-Ringe 313 gegenüber der Kolbenstange 32 abgedichtet ist und der ein Lager 314 zur Drehlagerung der Kolbenstange 3 aufnimmt. Die Durchführstopfen 312 sind jeweils über ein Verschlussstück 315 axial in dem Zylinder 31 fixiert. Außen ist der Zylinder 31 an beiden Enden mit einer unrunden Anschlusskontur 316 versehen, die vorliegend aus einer Anordnung von umlaufend eingebrachten Einkerbungen gebildet ist. Der Zylinder 31 ist in dem Gehäuse 1 über Lager 311 drehbar gelagert.

Die Kolbenstange 32 ist durch ein erstes Kolbenstangenstück 321 und eine zweites Kolbenstangenstück 323 gebildet, die jeweils an einem Ende des Kolbens 33 mit diesem verbunden sind. Das erste Kolbenstangenstück 321 weist an seinem dem Kolben 33 gegenüberliegenden Ende einen Verbindungszapfen 322 zum Anschluss an eine Verbindungsstange 5 auf. In das zweite Kolbenstangenstück 323 ist an seinem dem Kolben 33 gegenüberliegenden Ende eine axiale Sackbohrung 324 zur Aufnahme eines Stabmagneten 34 eingebracht. Das zweite Kolbenstangenstück 323 ist aus nichtmagnetischem Metall, vorliegend Aluminium hergestellt.

An das Zylinderrohr 31 des Stoßdämpfers 3 ist eine im Wesentlichen rohrförmige Antriebswelle 41 angestellt, die über formschlüssig mit der Anschlusskontur 316 des Zylinderrohrs 31 verbunden ist. In der Antriebswelle 41 ist ein Halter 42 positioniert, der einen ersten Hallsensor 43 aufnimmt und der das zweite Kolbenstangenstück 323 umgibt. Über diesen ersten Hallsensor 43 ist eine Ermittlung der Position des Kolbens ermöglicht.

Das erste Kolbenstangenstück 321 ist über seinen Verbindungszapfen 322 mit einer Verbindungsstange 5 verbunden. Die Verbindungsstange 5 umfassend ist auf der Anschlusskontur 316 des Zylinderrohrs 31 die Gewindeaufnahme 61 einer Federspanneinrichtung befestigt, die mit dem Außengewinde des Gewindeholms 63 eines Federsitzes 62 im Eingriff ist. Durch Drehung der Gewindeaufnahme 61 ist eine axiale Bewegung des mit dieser im Gewindeeingriff stehenden Federsitzes 62 bewirkt.

Die Verbindungsstange 5 umgebend ist die als Spiraldruckfeder ausgebildete Feder 2 angeordnet, die mit einem Ende an dem Federsitz 62 anliegt, die eine erste, verschiebbare Federaufnahme darstellt. Mit ihrem anderen Ende liegt die Feder 2 über eine Scheibe 72 an einer Wellenführung 71 an, die eine Keilwelle 7 zur Aufnahme des Vorderrades 83 eines Zweirades aufnimmt. Die Scheibe 72 stellt eine zweite, ortsfeste Federaufnahme dar.

Das Gehäuse 1 umfasst ein oberes Gehäuseteil 11, das über eine Verbindungsmutter 12 mit Kontermutter 121 mit einem mittleren Gehäuseteil 13 verbunden ist, das den Zylinder 31 aufnimmt. Das mittlere Gehäuseteil 13 ist über eine Verbindungsmutter 14 mit Kontermuttern 141 mit einem unteren Gehäuseteil 15 verbunden. Auf das untere Gehäuseteil 15 ist ein Lenkkopflager 19 aufgebracht, das über zwei Kontermuttern 191 befestigt ist. Das untere Gehäuseteil 15 nimmt die von der Federspanneinrichtung und der Feder 2 umgebene Verbindungsstange 5 auf, die mit der Keilwelle 7 verbunden ist und an die sich die Wellenführung 71 anschließt. Endseitig ist das untere Gehäuseteil 15 über eine Befestigungsmutter 16 verschlossen, durch die ein weiteres auf das untere Gehäuseteil 15 aufgebrachtes Lenkkopflager 19 fixiert ist und durch welche die Keilwelle 7 hindurchgeführt ist. An der Außenwandung des unteren Gehäuseteils 15 sind zwei zweite Hallsensoren 151 befestigt, die mit an dem Federsitz 62 angeordneten Magneten 64 zusammenwirken. Über diese Magneten ist über die zweiten Hallsensoren 151 die Endlagenstellung in Druckstufenrichtung und in Zugstufenrichtung ermittelbar.

In dem oberen Gehäuseteil 11 ist die Antriebswelle 41 angeordnet, die über ein Nadellager 17 drehbar gelagert ist. Endseitig ist das obere Gehäuseteil 11 über eine Motorbefestigungsmutter 18 mit einer - nicht gezeigten - Kontermutter verschlossen, an der mittels Schrauben 181 ein Antriebsmotor 44 befestigt ist, der einen Antriebszapfen 441 aufweist, der mit einem Antriebszahnrad 45 verbunden ist, das in eine in der Antriebswelle 41 angeordnete Innenverzahnung eingreift. Über den Antriebsmotor 44 wird über eine Drehung der Antriebswelle 41 deine Drehung des Zylinders 31 sowie der mit diesem verbundenen Gewindeaufnahme 61 erzielt, wodurch eine Verstellung der Vorspannung der Feder 2 erfolgt.

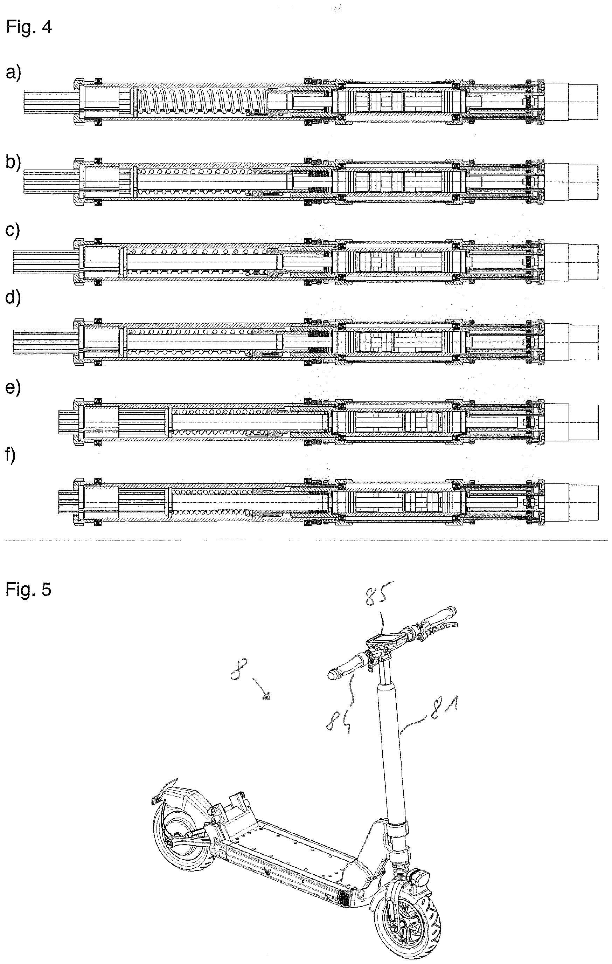

In Figur 5 ist beispielhaft ein Elektroroller 8 mit einer Lenkstange 81 gezeigt, in dessen Standrohr 82 die zuvor beschriebene Feder-Dämpfer-Anordnung eingebracht ist und über die das Rad 83 mit einem Lenker 84 verbunden ist. An dem Lenker 84 ist eine Rechnereinheit 85 angeordnet, die als Steuer- und Regeleinrichtung eingerichtet ist und über welche der Antriebsmotor 44 ansteuerbar ist. Die Rechnereinheit 44 ist mit den Hall-Sensoren 43, 151 verbunden. Die Rechnereinheit 85 ist derart programmiert, dass bei Anliegen einer statischen Last durch das Gewicht einer Person über den zweiten Hall-Sensor 43 die Position des Kolbens 33 in dem Zylinder 31 des Stoßdämpfers 3 ermittelt und mit der optimalen Null-Position verglichen wird. Befindet sich der Kolben 33 außerhalb eines Toleranzbereichs, so wird über den Antriebsmotor 44 die Vorspannung der Feder 2 durch Drehung der Antriebswelle 41 und der mit dieser verbundenen Gewindeaufnahme 61 soweit verstellt, bis sich das Kolbenmodul 4 im Bereich der Nulllage befindet. Sendet einer den zweiten Hallsensoren 151 ein Endlagensignal, wird der Antrieb gestoppt. Eine Drehung der Antriebswelle 41 ist dann nur in der entgegengesetzten Richtung möglich.

## Patentansprüche

1. Feder-Dämpfer-Anordnung, insbesondere für Radfahrzeuge, umfassend ein Gehäuse (1), in dem eine Feder (2) sowie ein Stoßdämpfer (3) angeordnet sind, wobei der Stoßdämpfer (3) einen mit einem Fluid befüllten Zylinder (31) aufweist, in dem ein Kolben (33) verschiebbar angeordnet ist, der mit einer Kolbenstange (32) verbunden ist und wobei eine Einrichtung zur Einstellung der Federvorspannung vorhanden ist, **dadurch gekennzeichnet, dass** die Einrichtung mit einem Antrieb (4) verbunden ist, über den sie verstellbar ist, wobei der Antrieb (4) mit einer Steuer- und Regeleinrichtung (85) verbunden ist, über den er ansteuerbar ist und wobei ein Sensor (43) zur Ermittlung der im Ruhezustand vorliegenden Position des Kolbens (33) in dem Zylinder angeordnet ist, der mit der Steuer- und Regeleinrichtung (85) verbunden ist.

2. Feder-Dämpfer-Anordnung nach einem Anspruch 1, **dadurch gekennzeichnet, dass** das Gehäuse (1) ein Standrohr umfasst, in dem die Feder (2) zwischen einer ersten verschiebbaren Federaufnahme (62) und einer zweiten ortsfesten Federaufnahme (72) vorgespannt positioniert ist, wobei die Feder (2) und der Stoßdämpfer (3) in dem Standrohr vorzugsweise hintereinander angeordnet sind.

3. Feder-Dämpfer-Anordnung nach Anspruch 1 oder 2, **dadurch gekennzeichnet, dass** die Kolbenstange (32) des Stoßdämpfers (3) mit einem Verbindungsrohr oder einer Verbindungsstange (5) verbunden ist, die durch die Feder geführt ist, die als Spiraldruckfeder (2) ausgebildet ist.

4. Feder-Dämpfer-Anordnung nach einem der vorgenannten Ansprüche, **dadurch gekennzeichnet, dass** die Einrichtung zur Einstellung der Federvorspannung eine Gewindeaufnahme (61) umfasst, die ein Gewinde, vorzugsweise ein Innengewinde aufweist, über das sie mit einem Gewinde, vorzugsweise einem Außengewinde eines Gewindeholms (63) eines Federsitzes (62) im Eingriff ist, der die erste Federaufnahme ausbildet und an dem die Feder anliegt.

5. Feder-Dämpfer-Anordnung nach einem der vorgenannten Ansprüche, **dadurch gekennzeichnet, dass** der Antrieb (44) mit einer Antriebswelle (41) verbunden ist, über die er mit der Einrichtung zur Einstellung der Federvorspannung, vorzugsweise mit dessen Gewindeaufnahme (61) verbunden ist.

6. Feder-Dämpfer-Anordnung nach Anspruch 5, **dadurch gekennzeichnet, dass** der Antrieb (44) durch einen Elektromotor gebildet ist, dessen Antriebszapfen (441) über ein Antriebszahnrad (45) mit einer Innenverzahnung der Antriebswelle (41) verbunden ist.

7. Feder-Dämpfer-Anordnung nach Anspruche 5 oder 6, **dadurch gekennzeichnet, dass** die Antriebswelle (41) hohl ausgebildet ist und über ein Lager, vorzugsweise ein Nadellager (17) in dem Gehäuse (1) drehbar gelagert ist.

8. Feder-Dämpfer-Anordnung nach einem dem Ansprüche 4 bis 7, **dadurch gekennzeichnet, dass** der Zylinder (31) des Stoßdämpfers (3) formschlüssig mit der Gewindeaufnahme (61) verbunden ist, wobei der Zylinder (31) vorzugsweise zumindest einen Teil der Antriebswelle ausbildet.

9. Feder-Dämpfer-Anordnung nach einem der vorgenannten Ansprüche, **dadurch gekennzeichnet, dass** die Kolbenstange (32) des Stoßdämpfers (3) oder ein mit dieser verbundenes Verbindungsteil mit wenigstens einem Magneten (34) verbunden ist, wobei an dem Zylinder (31) oder der Antriebswelle (41) ein Hall-Sensor (43) angeordnet ist, der mit dem wenigstens einen Magneten (34) zusammenwirkt.

10. Feder-Dämpfer-Anordnung nach einem der Ansprüche 4 bis 9, **dadurch gekennzeichnet, dass** die Gewindeaufnahme (61) und/oder der Federsitz (62) mit wenigstens einem Magneten (64) versehen ist, wobei an dem Gehäuse (1) wenigstens ein Hall-Sensor (151) angeordnet ist, der mit dem wenigstens einen Magneten (64) zusammenwirkt

11. Feder-Dämpfer-Anordnung nach einem der vorgenannten Ansprüche, **dadurch gekennzeichnet, dass** die Steuer- und Regeleinrichtung (85) derart eingerichtet ist, dass in Abhängigkeit von der von dem wenigstens einen Hallsensor (43) gemeldeten Kolbenposition die Federvorspannung über den Antrieb (44) derart verstellt wird, dass der Kolben (33) eine voreingestellte Position in dem Zylinder (31) einnimmt.

12. Feder-Dämpfer-Anordnung nach einem der vorgenannten Ansprüche, **dadurch gekennzeichnet, dass** ein Akkumulator angeordnet ist, der mit dem Antrieb (44) elektrisch verbunden ist.

13. Radfahrzeug, insbesondere Zweiradfahrzeug, mit wenigstens einer Radaufhängung, die eine Feder-Dämpfer-Anordnung nach einem der vorgenannten Ansprüche aufweist.

14. Radfahrzeug nach Anspruch 13, **dadurch gekennzeichnet, dass** das Radfahrzeug eine Lenkstange (81) aufweist, in der zur Abfederung von Stößen eine Feder-Dämpfer-Anordnung nach einem der vorgenannten Ansprüche angeordnet ist, wobei das Gehäuse durch eine Lenkstange (81) gebildet ist, die das Standrohr umfasst.

15. Radfahrzeug nach Anspruch 14, **dadurch gekennzeichnet, dass** die Verbindungsstange oder das Verbindungsrohr mit einer Keilwelle verbunden ist, die mit der Radaufhängung verbunden ist.
